# EUROPEAN PATENT SPECIFICATION

(11) **EP 4 119 902 B1**
(45) Date of publication and mention of the grant of the patent: **07.05.2025**
(21) Application number: 21775802.8
(22) Date of filing: 16.03.2021
(51) Int. Cl.: G01D 11/30, G01D 18/00

(54) **CALIBRATION BRACKET**
KALIBRIERUNGSBÜGEL
SUPPORT D'ÉTALONNAGE

(30) Priority: 23.03.2020 CN 202010209644
(43) Date of publication of application: 18.01.2023
(73) Proprietor: Autel Intelligent Technology Corp., Ltd., Shenzhen, Guangdong 518055 (CN)
(72) Inventor: LIU, Lianjun, Shenzhen, Guangdong 518055 (CN); ZHANG, Kaikai, Shenzhen, Guangdong 518055 (CN)
(74) Representative: Harris, Oliver John Richard
(86) International application number: PCT/CN2021/081128
(87) International publication number: WO 2021/190359

(56) References cited:
- WO-A1-2018/010578
- WO-A1-2019/201352
- CN-A- 101 915 268
- CN-A- 106 405 526
- CN-A- 111 289 031
- CN-B- 102 809 032
- CN-U- 208 421 900
- CN-U- 210 036 787
- CN-U- 210 036 788
- CN-U- 210 129 117
- CN-U- 212 206 155
- US-B1- 6 978 570

## Description

### Technical Field

The present application relates to the technical field of vehicle maintenance and equipment calibration, and in particular to a calibration bracket.

### Background Art

An advanced driver assistant system, referred to as ADAS, is an active safety technology to use a variety of sensors mounted to a vehicle to collect environmental data inside and outside the vehicle immediately, and perform technical processing such as the identification, detection, and tracking of static and dynamic objects, so as to enable a driver to detect a possible danger at the fastest time, so as to draw attention and improve the safety. ADAS uses sensors such as cameras, radars, lasers, ultrasonic waves, etc. to detect light, heat, pressure, or other variables used to monitor the condition of the vehicle. The sensors are typically on the front and rear bumpers, side-view mirrors, the inside of a steering column, or a windshield. During the use of the vehicle, vibrations, collisions, ambient temperature and humidity, etc. may change the physical installation state of the above-mentioned sensors so that an adjustment or a calibration needs to be performed irregularly.

When the above-mentioned sensors are adjusted or calibrated, a calibration element is usually mounted to a calibration bracket so as to adjust or calibrate a sensor on the vehicle. In order to calibrate the sensor on the vehicle accurately, it is necessary to accurately position the calibration element relative to the sensor on the vehicle. It is necessary not only to position the calibration element at a pre-set position relative to the sensor on the vehicle, but also to adjust the angle of the calibration element relative to the sensor on the vehicle. For example, the case that two opposite faces of the calibration element and the sensor on the vehicle need to be adjusted to be parallel, or at a certain angle, etc. Because the positions of the sensors on the vehicle are different, and the mounting positions of the calibration element on the calibration bracket are different, how to flexibly adjust the angle of the calibration element relative to the vehicle becomes a subject to be studied by a person skilled in the art.

CN 210036787 U relates to a calibration system and a calibration bracket to calibrate sensors on a vehicle, wherein the calibration bracket comprises: a base, a stand component and a support assembly installed on the stand component by means of a connecting part, and wherein the support assembly can be used to mount calibration components. CN 102809032 A relates to a video equipment and to an electric rotating slide rail device for mobile photography, wherein the slide rail device comprises a turntable provided on the support base, a first slide rail vertically fixed on the turntable, and a second slide rail connected to the first slide rail and movable along the first slide rail. Furthermore, the first slide rail is rotatable around its vertical axis.

### Summary of the Invention

Embodiments of the present invention are intended to provide a calibration bracket that facilitates the adjustment of the angle of rotation of a cross beam relative to the central axis of a stand component.

The embodiments of the present invention solve the technical problems by adopting the following technical solutions:
a calibration bracket, comprising: a base;
a stand component connected to the base;
a cross beam component mounted to the stand component, wherein the cross beam component is used for mounting a calibration element, and the calibration element is used for calibrating an advanced assistant driver system of a vehicle; and
a rotating component mounted between the stand component and the base for driving the stand component to pivot relative to the base about a central axis of the stand component so as to adjust a rotational angle of the cross beam component relative to the central axis of the stand component.

The rotating component comprises a support seat, a rotating base, and a stand base, wherein the support seat is mounted to the base, the rotating base is rotatably connected to the support seat, the stand base is fixed to the rotating base, and the stand base is fixedly connected to the stand component for supporting the stand component;
wherein the rotating base is pivotable relative to the base about the central axis of the stand component to drive the stand component to pivot relative to the base about the central axis of the stand component through the stand base;
wherein the rotating component further comprises a limiting member for limiting a rotational angle of the rotating base relative to the support seat;
wherein the limiting member comprises a first limiting member and a second limiting member, one of the first limiting member and the second limiting member being mounted to the support seat, and the other of the first limiting member and the second limiting member being mounted to the rotating base; the rotating base is fixed relative to the support seat when the first limiting member cooperates with the second limiting member, and
wherein the first limiting member is a locking portion, and the second limiting member is a locking knob; the locking portion is received between the rotating base and the support seat and is fixedly mounted to the support seat, and the rotating base is provided with an arc-shaped through hole so that the locking knob passes through the arc-shaped through hole and then cooperates with the locking portion, making the rotating base fixed relative to the support seat. In some embodiments, the rotating component further comprises a first thrust bearing and a second thrust bearing, wherein the first thrust bearing is mounted to the support seat, and the second thrust bearing is mounted to the rotating base;
the second thrust bearing is rotatable relative to the first thrust bearing such that the rotating base is rotatable relative to the support seat.

In some embodiments, the rotating component further comprises a connecting shaft component located at an axial connecting line of the first thrust bearing and the second thrust bearing for fixing an axial direction of the first thrust bearing and the second thrust bearing as the central axis of the stand component.

In some embodiments, the rotating base is rotatable relative to the support seat within a radian range of the arc-shaped through hole when the locking knob does not cooperate with the locking portion;
the locking knob may be used to fix the rotating base at any position within the radian range relative to the support seat.

In some embodiments, a radian scale is provided beside the arc-shaped through hole for assisting in identifying a rotational angle of the rotating base.

In some embodiments, the cross beam component may be mounted at any of at least two height positions of the stand component.

In some embodiments, the stand component comprises a fixed vertical rod and a movable vertical rod;
the fixed vertical rod is mounted to the rotating component;
the movable vertical rod is sleeved on the fixed vertical rod, and the movable vertical rod can move relative to the fixed vertical rod only along the length direction of the fixed vertical rod; the fixed vertical rod and the movable vertical rod are consistent with the central axis of the rotating component.

In some embodiments, the cross beam component may be mounted to the movable vertical rod or the fixed vertical rod;
when the cross beam component is mounted to the movable vertical rod, the cross beam component can be driven by the movable vertical rod to move relative to the fixed vertical rod along the length direction of the fixed vertical rod.

In some embodiments, the cross beam component comprises a first cross beam portion, a second cross beam portion, and a connecting portion;
the connecting portion is mounted to the stand component, one end of the connecting portion being pivotably connected to the first cross beam portion, and the other end of the connecting portion being pivotably connected to the second cross beam portion.

In comparison with the prior art, according to the calibration bracket of the present embodiment, by a rotating component, the rotational angle of the cross beam component relative to the central axis of the stand component is adjusted by driving the stand component to pivot relative to the base about the central axis of the stand component, so that the rotation of the cross beam component is free from the mounting position. The calibration bracket is simple in structure, and convenient to carry.

### Brief Description of the Drawings

One or more embodiments are illustrated by way of examples with a figure in the corresponding drawings. The illustrative examples are not to be construed as limiting the embodiments. In the drawings, elements having the same reference numeral designations represent like elements, and unless otherwise specified, the drawings are not to scale.
Fig. 1 is a stereogram of a calibration bracket according to an embodiment of the present invention;
Fig. 2 is a schematic view of the assembly of a base and a rotating component of the calibration bracket shown in Fig. 1;
Fig. 3 is an exploded view of the rotating component shown in Fig. 2;
Fig. 4 is a schematic view of the assembly of a stand component and a rotating component of the calibration bracket shown in Fig. 1;
Fig. 5 is a schematic cross-sectional view of the rotating component shown in Fig. 2;
Fig. 6 is a schematic view of a locked captive screw in the calibration bracket shown in Fig. 1;
Fig. 7 is an enlarged schematic view at A in Fig. 6;
Fig. 8 is a schematic view of unscrewing the captive screw in the calibration bracket in Fig. 1;
Fig. 9 is an enlarged schematic view at B in Fig. 8;
Fig. 10 is a schematic view showing the structure of the stand component in Fig. 4.

### Detailed Description of the Invention

In order that the present invention may be readily understood, a more particular description of the invention will be rendered by reference to specific embodiments and the accompanying drawings. It needs to be noted that when an element is referred to as being "fixed" to another element, it can be directly on another element or one or more intermediate elements may be present between the elements. When one element is referred to as being "connected" to another element, it can be directly connected to the other element or one or more intermediate elements may be present between the elements. As used herein, orientational or positional relationships indicated by the terms "upper", "lower", "inner", "outer", "vertical", "horizontal", and the like are based on the orientational or positional relationships shown in the drawings, and are merely for the convenience in describing and simplifying the present invention, and do not indicate or imply that the referenced devices or elements must have a particular orientation, be constructed and operated in a particular orientation, and thus are not to be construed as limiting the present invention. Furthermore, the terms "first", "second", and the like are used for descriptive purposes only and are not to be construed as indicating or implying relative importance.

Unless defined otherwise, all technical and scientific terms used in the description have the same meaning as commonly understood by one of ordinary skill in the art to which this invention belongs. The terms used in the description of the present invention are for the purpose of describing specific embodiments only and are not intended to be limiting of the present invention. As used in the description, the term "and/or" includes any and all combinations of one or more of the associated listed items.

Furthermore, the technical features involved in various embodiments of the present invention described below can be combined as long as they do not conflict with each other.

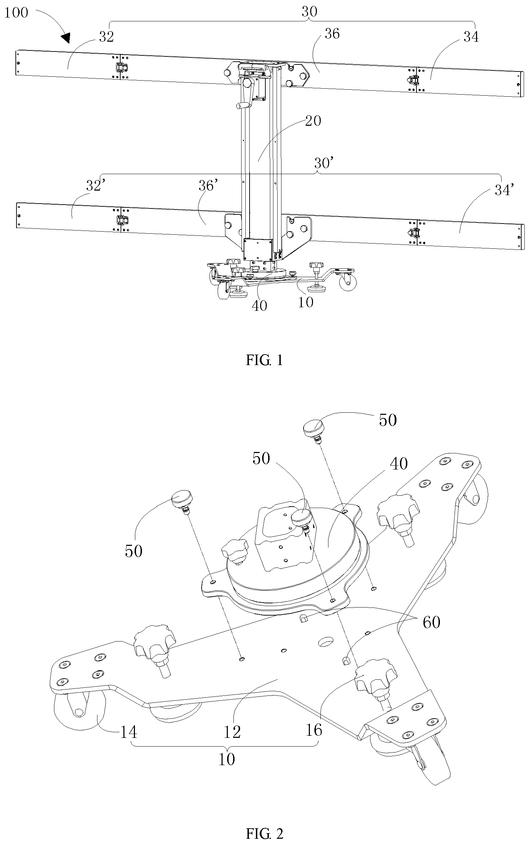

Referring to Fig. 1, an embodiment of the present invention provides a calibration bracket 100 comprising a base 10, a stand component 20, a cross beam component 30, 30', and a rotating component 40. The stand component 20 is connected to the base 10; the cross beam component is mounted to the stand component 20; the cross beam component is used to mount a calibration element for calibrating an advanced assistant driver system of the vehicle; the rotating component 40 is mounted between the stand component 20 and the base 10 for driving the stand component 20 to pivot relative to the base 10 about the central axis of the stand component 20 to adjust the rotational angle of the cross member component relative to the central axis of the stand component 20.

In this description, "mounting" includes welding, screwing, clamping, gluing, etc. to fix or limit a certain element or device to a specific position or place. The element or device may be fixed in a specific position or place or may be movable within a limited range. The element or device may or may not be detachable after being fixed or limited to a specific position or place, which is not limited by the embodiments of the present invention. As shown in the drawing, the connecting portion 36 of the cross beam component 30 is mounted above the stand component 20, such as the upper cross beam component 30 shown in Fig. 1. Or the connecting portion may be otherwise supported by the stand component 20. For example, the case that the connecting portion 36' of the cross beam component may be mounted to an appropriate side face of the stand component 20, such as the lower cross beam component 30' shown in Fig. 1.

In the embodiments of the present invention, "support" or "supporting" refers to bearing the weight of an element or a device such that it does not move downward due to its own weight. The cross beam component 30 may be used to mount a calibration element, such as a multi-line laser, a calibration target (a calibration plate or a calibration pattern plate), a radar reflecting or absorbing device, etc. to calibrate an on-board driver assistant system. Alternatively, the cross beam component 30 may co-support or mount the calibration element in combination with the stand component so as to enable the calibration element to be stably mounted to the calibration bracket. Fig. 1 shows two ways of mounting a cross beam component relative to a stand component, one being that the cross beam component 30 can be mounted to the upper end of the stand component 20 for mounting a calibration element corresponding to a sensor located higher up in the vehicle, such as a calibration target for calibrating an image acquisition device on a front window of the vehicle; and the other being that the cross beam component 30' may be mounted to the lower end of the stand component 20 for mounting a calibration element corresponding to a sensor located lower down in the vehicle, such as a radar calibration plate for calibrating an adaptive cruise control system near two headlights of the vehicle.

The terms "upper end" or "lower end" are used to describe the relative positions of the two cross beam components and are not intended to limit the specific position at which the cross beam component is mounted to the stand component 20.

The cross beam component shown in Fig. 1 includes one upper end or lower end that can be mounted to the stand component 20, or the cross beam component includes two cross beam components mountable to both the upper end and the lower end of the stand component 20 at the same time, thereby enabling the simultaneous calibration of different equipment on the vehicle.

Alternatively, the cross beam component, whether mounted to the upper end of the stand component 20 or to the lower end of the stand component 20, can move in the vertical direction relative to the stand component 20 to enable the mounted calibration elements to be located at different heights so as to accommodate the calibration of an advanced assistant driver systems on different types of vehicles. Further, the cross beam component may move relative to the stand component 20 within a defined height range.

Alternatively, the cross beam component may rotate relative to the stand component 20, e.g. the case that the cross beam component may be pivotable about an axis perpendicular to the cross beam component and the stand component, i.e. the cross beam component may be pivotable about the axis until the cross beam component coincides with the stand component in the vertical direction, thereby reducing the volume of the calibration bracket during the transportation and, in use, pivoting the cross beam component to the horizontal direction. Alternatively, the cross beam component can only rotate within a defined range relative to the stand component to adjust the cross beam component to the horizontal direction, wherein the cross beam component in the horizontal direction refers to a parallel direction of the cross beam component relative to a support face, such as a ground surface, for supporting the vehicle and the calibration bracket. By adjusting the cross beam component to the horizontal direction, it is possible to ensure that the calibration element is mounted to the cross beam component at the same height at any position, thereby ensuring the accuracy of the calibration element positioning.

The adjustment of the angle of the cross beam component in the horizontal direction is used primarily to accurately position the calibration element on the cross beam so that the face of the calibration element facing the vehicle can be more accurately aligned with the equipment to be calibrated on the vehicle. It will be understood that the adjustment of the angle of the cross beam component relative to the horizontal direction may also be achieved by means of a mechanism on the base or stand component, which is not limited herein.

In the embodiments of the present application, the connection mode of the cross beam component and the stand component is not limited as long as it can enable the scenario that the cross beam component and the stand component can be moved relative to each other or mounted in the manner mentioned above.

In the calibration bracket 100 of the present embodiment, the first cross beam portion 32 and the second cross beam portion 34 pivotably rotate relative to the connecting portion 36, respectively. Folding the cross beam component 30 can reduce the volume of the calibration bracket 100 to facilitate shipping. Of course, in other implementation modes of the present application, the cross beam component may comprise other implementation modes, such as a cross beam having a long length as shown in the figure, so as to enable the range of mounting of the calibration element to be widened, which can be applicable to the calibration of various types of vehicles. Or the cross beam component comprises a cross beam having a short length, which is only used for supporting the calibration element. If it is necessary to move the calibration element to a certain position, this can be achieved by a calibration bracket; alternatively, the cross beam component only includes a connecting mechanism to the stand component, the calibration element being mounted to the connecting mechanism.

In order to further achieve accurate positioning of the calibration element relative to the equipment to be calibrated on the vehicle, the angle of the calibration element towards the face of the equipment to be calibrated can be adjusted. In some implementation modes, the adjustment of the angle of the cross beam component toward the face of the vehicle is achieved by providing a mechanism of the cross beam component and the stand component bracket. However, such implementation mode is obviously less fast and convenient and requires multiple adjustments when the position of the cross beam component on the stand component changes, or when two cross beam components are mounted to the stand component. To this end, an embodiment of the present application provides an adjustment mechanism between the base and the stand component, such as the rotating component 40 shown in Fig. 1, capable of adjusting the angle of rotation of the stand component 20 about its central axis in the vertical direction, thereby enabling more flexible and convenient adjustment of the angle of the cross beam relative to the vehicle.

As shown in Fig. 2, in an implementation mode, the base 10 includes a base body 12, a roller 14, and a height adjustment member 16.

The base body 12 has a triangular claw shape, and includes three claws, each extending in three different directions. The base body 12 may be made of a metallic material.

The roller 14 is mounted at the bottom surface of the base body 12, and the number of the rollers 14 may be three, and each of the rollers 14 is mounted at the end of one corresponding claw for facilitating the movement of the base body 12. In the present embodiment, the roller 14 is a universal moving roller so that the base body 12 can move back and forth, and left and right randomly.

The height adjustment member 16 is mounted to the base body 12 for adjusting the height of the base body 12. In the present embodiment, the height adjustment members 16 are adjusting knobs, the number of which is three. At least one section of a spiral rod is included below the knob, and the spiral rod is engaged with a threaded through hole at the base body 12 to enable height adjustment. Each height adjustment member 16 is mounted to one corresponding claw and close to one corresponding roller 14. Three height adjustment members 16 are a regular triangular distribution.

In one implementation mode, the height adjustment member 16 can be adjusted so that the height adjustment member 16 is in contact with the ground. Therefore, the base 10 can be prevented from sliding under the driving of the roller 14 when the cross beam component 30 or the stand component 20 needs to adjust the rotational angle.

It could be understood that in some other embodiments, the shape of the base body 12 may vary according to actual needs and is not limited to a triangular claw shape. For example, the base body 12 may be rectangular or circular. The number of the rollers 14 and the height adjustment members 16 may be respectively increased or decreased according to actual requirements. For example, in the case of the base body 12 of a triangular claw shape, the height adjustment members can be two, and one stand bar with a fixed height is coordinated to adjust the angle of the base body 12.

The rotating component 40 is mounted to the base 10. Alternatively, the rotating component 40 may be detachably mounted to the base 10, e.g. the case that the rotating component 40 may be mounted to the base 10 by means of a captive screw 50, so as to facilitate quick fixing or removal of the rotating component 40 to or from the base 10. Namely, the rotating component 40 can be mounted to the calibration bracket 100 as a fitting. When the stand component 20 needs to rotate relative to the base 10, the rotating component 40 can be mounted; otherwise, the rotating component 40 need not be mounted. Alternatively, the rotating component 40 may be fixedly mounted to the base 10.

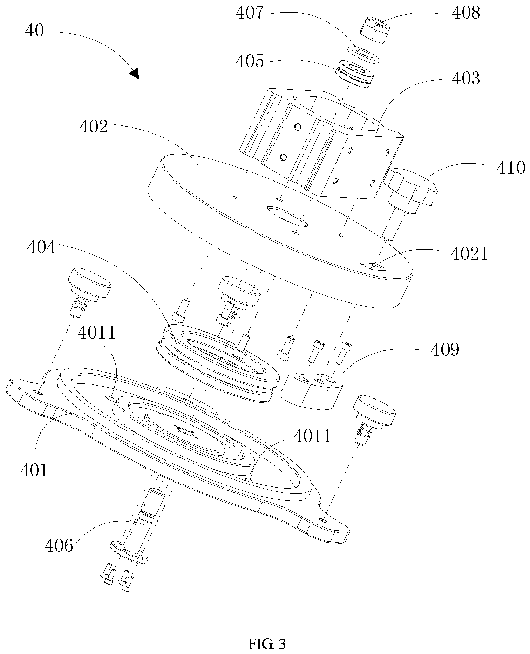

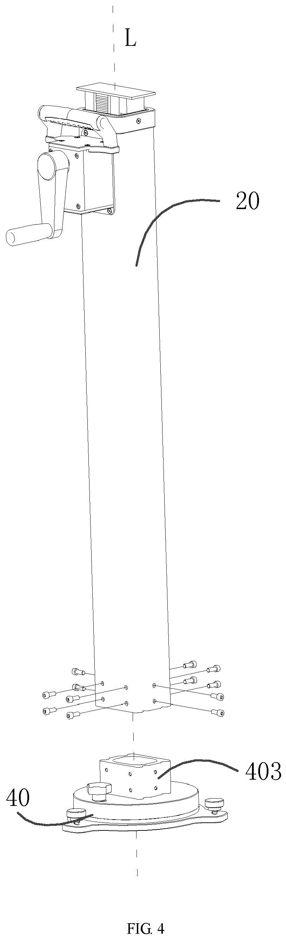

Referring to Figs. 3 and 4 together, the rotating component 40 comprises a support seat 401 detachably mounted to the base body 12, a rotating base 402 rotatably connected to the support seat 401, and a stand base 403 fixed to the rotating base 402 by means of a screw or the like, the stand base 403 being fixedly connected to the stand component 20 for supporting the stand component 20. The rotating base 402 can pivot relative to the base 10 about the central axis L of the stand component 20 to drive the stand component 20 to pivot relative to the base 10 about the central axis L of the stand component 20 via the stand base 403, thereby adjusting the rotational angle of the cross beam component 30 relative to the central axis L of the stand component 20.

In one implementation mode, the stand base 403 is adapted to the shape of the junction of the stand component 20. In the embodiment, the stand base 403 is a hollow structure to reduce the weight of the calibration bracket 100. The stand base 403 is received at the bottom of the stand component 20 and the stand component 20 and the stand base 403 are fixed by a screw.

In other embodiments, the internal dimension of the hollow region of the stand base 403 may also be larger than the peripheral dimension of the end of the stand component 20 such that the end of the stand component 20 is inserted into the hollow region of the stand base 403 and then the stand component 20 is fixed to the stand base 403 by a screw.

In one implementation mode, the rotating component 40 further comprises a first thrust bearing 404 and a second thrust bearing 405. The first thrust bearing 404 is mounted to the support seat 401, the rotating base 402 is inversely mounted to the first thrust bearing 404, and the second thrust bearing 405 is mounted to the rotating base 402. The second thrust bearing 405 is rotatable relative to the first thrust bearing 404 such that the rotating base 402 is rotatable relative to the support seat 401. Here, the inversing mounting means that the opening of the rotating base 402 is downward, and the inner surface of the rotating base 402 covers the first thrust bearing 404.

It will be understood that the rotating base 402 may be rotatable relative to the support seat 401 by other rotational mechanisms. For example, the case that the rotating base 402 is fixedly provided with a rotary shaft in the direction of the support seat 401, the support seat 401 is fixedly provided with a sleeve for the rotary shaft to rotate, and the axis of the rotary shaft is consistent with the central axis of the stand component. When the rotary shaft is inserted into the sleeve, the rotating base 402 can rotate relative to the support seat 401. Or the support seat 401 is fixedly provided with a rotary shaft to the rotating base 402, and the rotating base 402 is fixedly provided with a sleeve for the rotary shaft to rotate. When the rotary shaft is inserted into the sleeve, the rotating base 402 can rotate relative to the support seat 401.

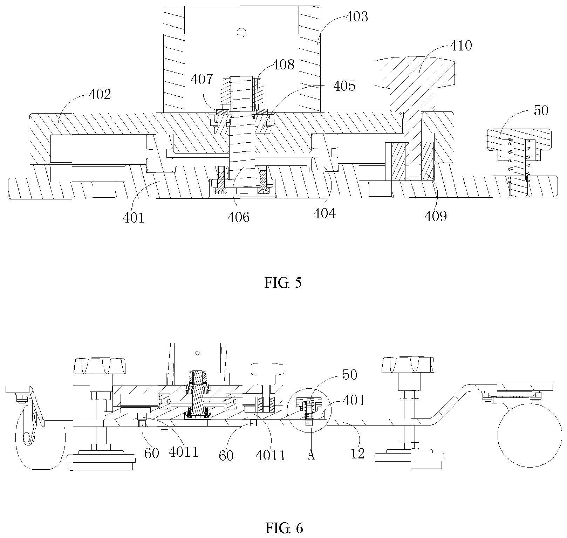

Alternatively, the rotating component 40 further comprises a connecting shaft component located at the axial connecting line of the first thrust bearing 404 and the second thrust bearing 405 for fixing the axial direction of the first thrust bearing 404 and the second thrust bearing 405 as the central axis L of the stand component 20. The connecting shaft component comprises a connecting shaft 406, a washer 407, and a lock nut 408. Both the support seat 401 and the rotating base 402 are provided with a hole through which the connecting shaft 406 passes. As shown in Fig. 5, the bottom end of the connecting shaft 406 is fixed to the bottom of the support seat 401 via a screw. The connecting shaft 406 passes through the support seat 401, the first thrust bearing 404, the rotating base 402, and the second thrust bearing 405 in sequence, and extends into the hollow structure of the stand base 403. The washer 407 and the lock nut 408 are mounted to the top end of the connecting shaft 406, and the connecting shaft 406 is axially limited on the rotating base 402 via the lock nut 408, the washer 407, and the second thrust bearing 405. The bottom of the support seat 401 is provided with a groove for receiving the bottom end of the connecting shaft 406 so that the bottom end of the connecting shaft 406 is not exposed to the support seat 401 when being fixed to the bottom of the support seat 401.

The rotating component 40 further includes a limiting member for limiting the rotational angle of the rotating base 402 relative to the support seat 401, i.e. it is to limit the rotational angle of the stand component 20 relative to the central axis L.

The limiting member comprises a first limiting member and a second limiting member. One of the first limiting member and the second limiting member is mounted to the support seat 401, and the other of the first limiting member and the second limiting member is mounted to the rotating base 402. When the first limiting member and the second limiting member cooperate, the rotating base 402 is fixed relative to the support seat 401.

The first limiting member cooperating with the second limiting member means that the first limiting member and the second limiting member generate a connecting relationship to mutually fix the positions of each other so as to enable the relative positions of the rotating base 402 and the support seat 401 to be fixed, thereby limiting the rotational angle of the stand component 20 relative to the central axis L. The first limiting member and the second limiting member do not cooperate, which means that the first limiting member and the second limiting member have not yet generated a connecting relationship, and thus cannot fix the positions of each other.

In an embodiment, the first limiting member is a locking portion 409, the second limiting member is a locking knob 410, and the locking portion 409 is received between the rotating base 402 and the support seat 401 and is fixedly mounted to the support seat 401. The rotating base 402 is provided with an arc-shaped through hole 4021 so that the locking knob 410 passes through the arc-shaped through hole 4021 and then cooperates with the locking portion 409, such as threaded locking so that the rotating base 402 is fixed relative to the support seat 401. Of course, the first limiting member and the second limiting member can also cooperate in other ways, for example, the case that the first limiting member is an elastic clip, the second limiting member is a snap, and the clip is locked with the snap, so that the rotating base 402 is fixed relative to the support seat 401.

When the locking knob 410 is not cooperating with the locking portion 409, the rotating base 402 can rotate relative to the support seat 401 within the radian range of the arc-shaped through hole 4021, so that the stand component 20 is driven to rotate about the central axis L of the stand component 20 by the stand base 403, so as to adjust the rotational angle of the cross beam component 30 relative to the central axis L of the stand component 20. Alternatively, rotating the cross beam component 30 or rotating the stand component 20 can drive the rotating base 402 to rotate relative to the support seat 401 within the radian range of the arc-shaped through hole 4021.

The range in which the rotating base 402 can rotate is the radian range of the arc-shaped through hole 4021, which starts from one end of the second limiting member located at the arc-shaped through hole 4021, and ends from the other end of the second limiting member located at the arc-shaped through hole 4021. That is, within this range, the first limiting member cooperates with the second limiting member, otherwise, the rotating base 402 covers the first limiting member, and the second limiting member cannot cooperate with the first limiting member to get fixed.

Alternatively, a radian scale may be provided next to the arc-shaped through hole 4021 of the upper surface of the rotating base 402 (i.e. the surface on which the stand base 403 is mounted). The radian scale may be used to assist in identifying the angle of the rotating base 402 as it rotates.

The locking knob 410 may be used to fix the rotating base 402 at any position within the radian range relative to the support seat 401. That is, when the rotating base 402 rotates to a certain required position, the locking knob 410 can be connected to the locking portion 409 by means of screw-threaded coupling by passing through the arc-shaped through hole 4021, thereby fixing the rotating base 402 relative to the support seat 401.

It will be understood that the rotating base 402 may limit the angle of rotation with the support seat 401 by other limiting means. For example, the case that the first limiting member provided on the inner surface of the rotating base 402 cooperates with the second limiting member mounted to the circumferential surface of the first thrust bearing to limit the rotational angle; or the first limiting member is provided on a surface of the rotating base 402 in contact with the support seat 401, and the second limiting member is provided on the support seat 401; or the first limiting member is provided on the outer surface of the rotating base 402, and the second limiting member is provided on the support seat 401.

With reference to Figs. 3, 6, and 7 together, the base body 12 and the support seat 401 are both provided with a threaded hole adapted to the captive screw 50. The support seat 401 is fixed to the base 10 via the captive screw 50. In the present embodiment, the support seat 401 is in the shape of a disk as a whole, three claws are formed extending from the disk in three different directions, the included angle between two adjacent claws is 120 degrees, and the three claws are respectively provided with a threaded hole adapted to the captive screw 50.

In order to ensure that the rotating component 40 has a fool-proof function when mounted, two pins 60 are provided on the base body 12, and two pin holes 4011 are provided on the support seat 401 at positions corresponding to the two pins 60. When the pin 60 is out of alignment with the pin hole 4011, the support seat 401 cannot fit with the base body 12; if the pin hole 4011 is aligned with the pin 60 and the angle between the pin hole 4011 and the pin 60 differs by 180°, the captive screw 50 cannot be screwed into the threaded hole of the base body 12 corresponding to the captive screw 50, i.e. the rotating component 40 cannot be mounted to the base 10.

Fool-proof, also called fail-safe, refers to the prevention of error through the control of product design and manufacturing process, namely, the design of the pin 60 and the pin hole 4011 prevents the rotating component 40 from being mounted to the base 10 in error. Only in the case where the pin 60 and the pin hole 4011 cooperate completely and accurately, the rotating component 40 can be mounted to the base 10, otherwise, the mounting cannot be performed.

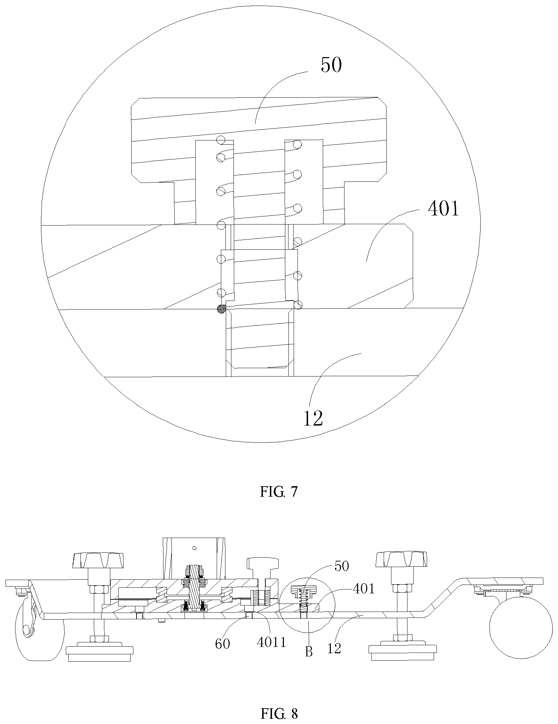

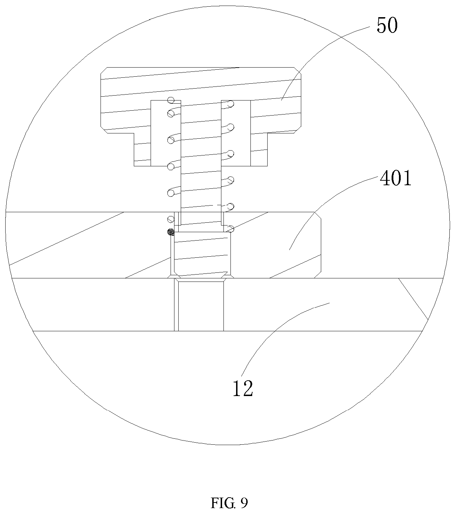

Referring to Figs. 8 and 9 together, when it is necessary to remove the rotating component 40 from the base 10, simply rotate the captive screw 50 counterclockwise to disengage the captive screw 50 from the base 10. The captive screw 50 automatically retracts into the threaded hole of the support seat 401 corresponding to the captive screw 50 under the elastic force of the spring of the captive screw 50. When it is required to mount the rotating component 40 to the base 10, it is merely required to place the rotating component 40 in the correct position. In this case, under the action of the spring of the captive screw 50, the captive screw will not protrude out of the bottom of the support seat 401, thereby ensuring that the support seat 401 is in close-fitting with the base body 12. In this case, it is merely required to press the captive screw 50 by hand and perform rotating clockwise to fix the two under the action of the thread.

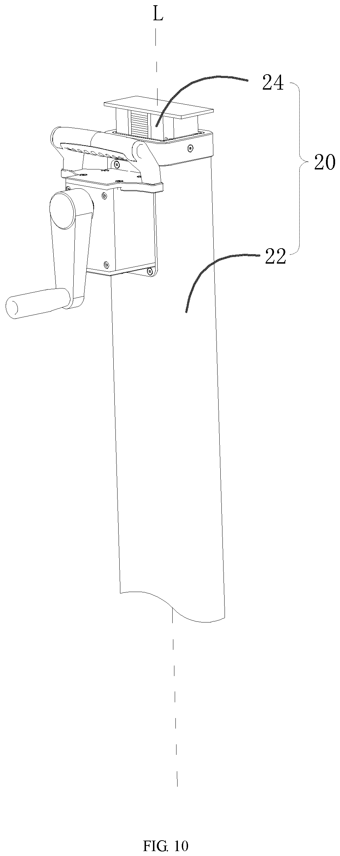

Referring to Fig. 10, in some embodiments, the stand component 20 includes a fixed vertical rod 22 mounted to the rotating component 40 and a movable vertical rod 24. The fixed vertical rod 22 and the movable vertical rod 24 coincide with the central axis of the rotating component 40. The movable vertical rod 24 is sleeved in the fixed vertical rod 22, and the movable vertical rod 24 can move relative to the fixed vertical rod 22 only along the length direction of the fixed vertical rod 22.

In the present embodiment, the fixed vertical rod 22 and the movable vertical rod 24 are respectively square tubes, and the movable vertical rod 24 is closely sleeved in the fixed vertical rod 22 so that the movable vertical rod 24 can only move relative to the fixed vertical rod 22 along the length direction of the fixed vertical rod 22, and the movable vertical rod 24 can be prevented from moving relative to the fixed vertical rod 22 in other directions. At the same time, the height of the stand component 20 can be reduced to nearly half of the original height by means of sleeving and connecting the movable vertical rod 24 and the fixed vertical rod 22 so that it is convenient for carrying.

In some embodiments, one driving mechanism (not shown) may be mounted to the fixed vertical rod 22 for driving the movable vertical rod 24 to move along the length direction of the fixed vertical rod 22 relative to the fixed vertical rod 22. The driving mechanism may be a gearbox drive, a lead screw drive, a synchronous belt drive, etc. as long as the movable vertical rod 24 can be driven to move relative to the fixed vertical rod 22.

In some embodiments, the movable vertical rod 24 is provided with a limiting portion, the limiting portion is located in the fixed vertical rod 22, the inner wall of the fixed vertical rod 22 is provided with a flange, and the flange is close to the top end of the fixed vertical rod 22. When the movable vertical rod 24 moves relative to the fixed vertical rod 22 until the limiting portion abuts against the flange, the movable vertical rod 24 stops moving so that the movable vertical rod 24 can be prevented from separating from the fixed vertical rod 22.

In some embodiments, a fastening mechanism is mounted to the fixed vertical rod 22 for fixing the movable vertical rod 24 in a required position. For example, the case that the fastening mechanism may be a screw that passes through the fixed vertical rod 22 and threadedly engages with the fixed vertical rod 22. When the movable vertical rod 24 moves to a required position relative to the fixed vertical rod 22, the screw is rotated to abut against the movable vertical rod 24 so that the movable vertical rod 24 is fixed in the required position. Rotating the screw in the reverse direction to disengage the screw from the movable vertical rod 24 moves the movable vertical rod 24 relative to the fixed vertical rod 22 along the length direction of the fixed vertical rod 22.

Referring again to Fig. 1, in some embodiments, the cross beam component 30 may be mounted at any of at least two height positions of the stand component 20.

The cross beam component 30 can be mounted to the movable vertical rod 24 or the fixed vertical rod 22. When the cross beam component 30 is mounted to the movable vertical rod 24, the cross beam component 30 can be driven by the movable vertical rod 24 to move relative to the fixed vertical rod 21 along the length direction of the fixed vertical rod 22.

The cross beam component 30 includes a first cross beam portion 32, a second cross beam portion 34, and a connecting portion 36. The connecting portion 36 can be mounted to the movable vertical rod 24 or the fixed vertical rod 22 by one fastener. For example, the case that the fastener can be a U-shaped corner code that is mounted to the movable vertical rod 24 or the fixed vertical rod 22, the connecting portion 36 being fixed within a U-shaped groove of the U-shaped corner code.

One end of the connecting portion 36 is pivotably connected to the first cross beam portion 32, and the other end of the connecting portion 36 is pivotably connected to the second cross beam portion 34, in a manner which may be, but is not limited to, a hinge structure. The first cross beam portion 32 and the second cross beam portion 34 are respectively rotatable toward each other relative to the connecting portion 36 to fold the cross beam component 30. The first cross beam portion 32 and the second cross beam portion 34 are respectively rotatable away from each other relative to the connecting portion 36 to unfold the upper cross beam component 30. Alternatively, the first cross beam portion 32, the second cross beam portion 34, and the connecting portion 36 are all square tubes to reduce the weight of the calibration bracket 100. It will be understood that in some other embodiments, the first cross beam portion 32, the second cross beam portion 34, and the connecting portion 36 may be tubing, special-shaped materials, or rods, etc. of other shapes.

When the cross beam component 30' is mounted to the fixed vertical rod 22, the cross beam component 30' can only pivot relative to the base 10 about the central axis L of the stand component 20 via the rotating component 40.

The cross beam component 30' includes a first cross beam portion 32', a second cross beam portion 34', and a connecting portion 36'. The cross beam component 30' is similar in structure to the cross beam component 30, which will not be repeated herein. In some embodiments, the calibration bracket 100 may not include the above-mentioned rotating component 40. For example, a central axis is fixed below the stand component 20, the central axis rotates synchronously with the stand component 20, a sleeve is fixed on the base, and the central axis is inserted into the sleeve and rotatably connected therewith.

A first limiting block and a second limiting block are mounted to the top end of the sleeve, and a locating block is fixed on the outer surface of the central axis. When the central axis is inserted into the sleeve, the locating block is placed between the first limiting block and the second limiting block. When the stand component 20 rotates relative to the base 10, the first limiting block and the second limiting block limit the range of rotation of the stand component 20 via the locating block. In order to better rotate the stand component 20 to a suitable position (namely, the cross beam component rotates to a required position about the central axis of the stand component) and fix the same, the first limiting block or the second limiting block can be in a detachable fixed connection with the sleeve.

A magnet can also be provided on two sides of the locating block. The contact faces of the first limiting block and the second limiting block with the locating block are magnetic conductive metal surfaces. The fixing of the magnet and the metal can be used for positioning connection of two limit positions to prevent the stand component from being easily rotated.

According to the present invention, a calibration bracket is provided. The rotational angle of the cross beam component relative to the central axis of the stand component is adjusted by driving the stand component to pivot relative to the base about the central axis of the stand component so that the rotation of the cross beam component is free from the mounting position. The calibration bracket is simple in structure, and convenient to carry.

Finally, it should be noted that: the above embodiments are merely illustrative of the technical solutions of the present invention, rather than limiting thereto; combinations of technical features in the above embodiments or in different embodiments are also possible within the idea of the present invention, and the steps can be implemented in any order, and there are many other variations of the different aspects of the present invention as described above, which are not provided in detail for the sake of brevity; although the present invention has been described in detail with reference to the foregoing embodiments, those of ordinary skills in the art will appreciate that: the technical solutions disclosed in the above-mentioned embodiments can still be modified, or some of the technical features can be replaced by equivalents; such modifications and substitutions do not depart the essence of corresponding technical solutions from the scope of the technical solutions of various embodiments of the present invention.

## Claims

1. A calibration bracket (100) comprising:
a base (10);
a stand component (20) connected to the base (10);
a cross beam component (30, 30') mounted to the stand component (20), wherein the cross beam component (30, 30') is used for mounting a calibration element, and the calibration element is used for calibrating an advanced assistant driver system of a vehicle; and
**characterized by**
a rotating component (40) mounted between the stand component (20) and the base (10) for driving the stand component (20) to pivot relative to the base (10) about a central axis of the stand component (20) so as to adjust a rotational angle of the cross beam component (30, 30') relative to the central axis of the stand component (20),
wherein the rotating component (40) comprises a support seat (401), a rotating base (402), and a stand base (403), wherein the support seat (401) is mounted to the base (10), the rotating base (402) is rotatably connected to the support seat (401), the stand base (403) is fixed to the rotating base (402), and the stand base (403) is fixedly connected to the stand component (20) for supporting the stand component (20);
wherein the rotating base (402) is pivotable relative to the base (10) about the central axis of the stand component (20) to drive the stand component (20) to pivot relative to the base (10) about the central axis of the stand component (20) through the stand base (403),
wherein the rotating component (40) further comprises a limiting member for limiting a rotational angle of the rotating base (402) relative to the support seat (401);
wherein the limiting member comprises a first limiting member and a second limiting member, one of the first limiting member and the second limiting member being mounted to the support seat (401), and the other of the first limiting member and the second limiting member being mounted to the rotating base (402); the rotating base (402) is fixed relative to the support seat (401) when the first limiting member cooperates with the second limiting member, and
wherein the first limiting member is a locking portion (409), and the second limiting member is a locking knob (410); the locking portion (409) is received between the rotating base (402) and the support seat (401) and is fixedly mounted to the support seat (401), and the rotating base (402) is provided with an arc-shaped through hole (4021) so that the locking knob (410) passes through the arc-shaped through hole (4021) and then cooperates with the locking portion (409), making the rotating base (402) fixed relative to the support seat (401).

2. The calibration bracket (100) according to claim 1, **characterized in that**
the support seat (401) is detachably mounted to the base (10).

3. The calibration bracket (100) according to claim 1 or 2, **characterized in that**
the rotating component (40) further comprises a first thrust bearing (404) and a second thrust bearing (405), wherein the first thrust bearing (404) is mounted to the support seat (401), and the second thrust bearing (405) is mounted to the rotating base (402);
the second thrust bearing (405) is rotatable relative to the first thrust bearing (404) such that the rotating base (402) is rotatable relative to the support seat (401).

4. The calibration bracket (100) according to claim 3, **characterized in that**
the rotating component (40) further comprises a connecting shaft component located at an axial connecting line of the first thrust bearing (404) and the second thrust bearing (405) for fixing an axial direction of the first thrust bearing (404) and the second thrust bearing (405) as the central axis of the stand component (20).

5. The calibration bracket (100) according to claim 1, **characterized in that**
the rotating base (402) is rotatable relative to the support seat (401) within a radian range of the arc-shaped through hole (4021) when the locking knob does not cooperate with the locking portion (409);
the locking knob may be used to fix the rotating base (402) at any position within the radian range relative to the support seat (401).

6. The calibration bracket (100) according to claim 5, **characterized in that**
a radian scale is provided beside the arc-shaped through hole (4021) for assisting in identifying a rotational angle of the rotating base (402).

7. The calibration bracket (100) according to any one of the preceding claims, **characterized in that**
the cross beam component (30, 30') may be mounted at any of at least two height positions of the stand component (20).

8. The calibration bracket (100) according to claim 7, **characterized in that**
the stand component (20) comprises a fixed vertical rod (22) and a movable vertical rod (24);
the fixed vertical rod (22) is mounted to the rotating component (40);
the movable vertical rod (24) is sleeved on the fixed vertical rod (22), and the movable vertical rod (24) can move relative to the fixed vertical rod (22) only along the length direction of the fixed vertical rod (22);
the fixed vertical rod (22) and the movable vertical rod (24) are consistent with the central axis of the rotating component (40).

9. The calibration bracket (100) according to claim 8, **characterized in that**
the cross beam component (30, 30') may be mounted to the movable vertical rod (24) or the fixed vertical rod (22);
when the cross beam component (30, 30') is mounted to the movable vertical rod (24), the cross beam component (30, 30') can be driven by the movable vertical rod (24) to move relative to the fixed vertical rod (22) along the length direction of the fixed vertical rod (22).

10. The calibration bracket (100) according to any one of the preceding claims, **characterized in that**
the cross beam component (30, 30') comprises a first cross beam portion (32, 32'), a second cross beam portion (34, 34'), and a connecting portion (36, 36');
the connecting portion (36, 36') is mounted to the stand component (20), one end of the connecting portion (36, 36') being pivotably connected to the first cross beam portion (32, 32'), and the other end of the connecting portion (36, 36') being pivotably connected to the second cross beam portion (34,34').

## Patentansprüche

1. Kalibrierhalterung (100), die Folgendes umfasst:
eine Basis (10);
eine Ständerkomponente (20), die mit der Basis (10) verbunden ist;
eine Querträgerkomponente (30, 30'), die an der Ständerkomponente (20) montiert ist, wobei die Querträgerkomponente (30, 30') zum Montieren eines Kalibrierelements verwendet wird und das Kalibrierelement zum Kalibrieren eines erweiterten Hilfsantriebssystems eines Fahrzeugs verwendet wird; und
**gekennzeichnet durch**
eine sich drehende Komponente (40), die zwischen der Ständerkomponente (20) und der Basis (10) zum Antreiben der Ständerkomponente (20) zum Schwenken relativ zur Basis (10) um eine Mittelachse der Ständerkomponente (20) montiert ist, um einen Drehwinkel der Querträgerkomponente (30, 30') relativ zur Mittelachse der Ständerkomponente (20) anzupassen,
wobei die sich drehende Komponente (40) einen Stützsitz (401), eine sich drehende Basis (402) und eine Ständerbasis (403) umfasst, wobei der Stützsitz (401) an der Basis (10) montiert ist, die sich drehende Basis (402) drehbar mit dem Stützsitz (401) verbunden ist, die Ständerbasis (403) an der sich drehenden Basis (402) fixiert ist und die Ständerbasis (403) zum Stützen der Ständerkomponente (20) fest an der Ständerkomponente (20) fixiert ist;
wobei die sich drehende Basis (402) relativ zur Basis (10) um die Mittelachse der Ständerkomponente (20) schwenkbar ist, um die Ständerkomponente (20) über die Ständerbasis (403) zum Schwenken relativ zur Basis (10) um die Mittelachse der Ständerkomponente (20) anzutreiben,
wobei die sich drehende Komponente (40) zum Begrenzen eines Drehwinkels der sich drehenden Basis (402) relativ zum Stützsitz (401) ferner ein Begrenzungselement umfasst;
wobei das Begrenzungselement ein erstes Begrenzungselement und ein zweites Begrenzungselement umfasst, wobei eines des ersten Begrenzungselements und des zweiten Begrenzungselements am Stützsitz (401) montiert ist und das andere des ersten Begrenzungselements und des zweiten Begrenzungselements an der sich drehenden Basis (402) montiert ist; die sich drehende Basis (402) relativ zum Stützsitz (401) fixiert ist, wenn das erste Begrenzungselement mit dem zweiten Begrenzungselement zusammenwirkt, und
wobei das erste Begrenzungselement ein Verriegelungsabschnitt (409) ist und das zweite Begrenzungselement ein Verriegelungsknauf (410) ist; der Verriegelungsabschnitt (409) zwischen der sich drehenden Basis (402) und dem Stützsitz (401) aufgenommen und fest am Stützsitz (401) montiert ist und die sich drehende Basis (402) mit einem bogenförmigen Durchgangsloch (4021) versehen ist, derart, dass der Verriegelungsknauf (410) durch das bogenförmige Durchgangsloch (4021) verläuft und dann mit dem Verriegelungsabschnitt (409) zusammenwirkt, wodurch die sich drehende Basis (402) fest am Stützsitz (401) fixiert wird.

2. Kalibrierhalterung (100) nach Anspruch 1, **dadurch gekennzeichnet, dass**
der Stützsitz (401) lösbar an der Basis (10) montiert ist.

3. Kalibrierhalterung (100) nach Anspruch 1 oder 2, **dadurch gekennzeichnet, dass**
die sich drehende Komponente (40) ferner ein erstes Drucklager (404) und ein zweites Drucklager (405) umfasst, wobei das erste Drucklager (404) am Stützsitz (401) montiert ist und das zweite Drucklager (405) an der sich drehenden Basis (402) montiert ist;
das zweite Drucklager (405) relativ zum ersten Drucklager (404) drehbar ist, derart, dass die sich drehende Basis (402) relativ zum Stützsitz (401) drehbar ist.

4. Kalibrierhalterung (100) nach Anspruch 3, **dadurch gekennzeichnet, dass**
die sich drehende Komponente (40) ferner eine Verbindungswellenkomponente umfasst, die sich zum Fixieren einer Axialrichtung des ersten Drucklagers (404) und des zweiten Drucklagers (405) als die Mittelachse der Ständerkomponente (20) an einer axialen Verbindungslinie des ersten Drucklagers (404) und des zweiten Drucklagers (405) befindet.

5. Kalibrierhalterung (100) nach Anspruch 1, **dadurch gekennzeichnet, dass**
die sich drehende Basis (402) relativ zum Stützsitz (401) in einem Bogenmaßbereich des bogenförmigen Durchgangslochs (4021) drehbar ist, wenn der Verriegelungsknauf nicht mit dem Verriegelungsabschnitt (409) zusammenwirkt;
der Verriegelungsknauf verwendet werden kann, um die sich drehende Basis (402) in beliebiger Position im Bogenmaßbereich relativ zum Stützsitz (401) zu fixieren.

6. Kalibrierhalterung (100) nach Anspruch 5, **dadurch gekennzeichnet, dass**
zum Unterstützen des Identifizierens eines Drehwinkels der sich drehenden Basis (402) neben dem bogenförmigen Durchgangsloch (4021) eine Bogenmaßskala bereitgestellt ist.

7. Kalibrierhalterung (100) nach einem der vorhergehenden Ansprüche, **dadurch gekennzeichnet, dass**
die Querträgerkomponente (30, 30') in einer beliebigen von mindestens zwei Höhenpositionen der Ständerkomponente (20) montiert werden kann.

8. Kalibrierhalterung (100) nach Anspruch 7, **dadurch gekennzeichnet, dass**
die Ständerkomponente (20) eine feste vertikale Stange (22) und eine bewegbare vertikale Stange (24) umfasst;
die feste vertikale Stange (22) in der sich drehenden Komponente (40) montiert ist;
die bewegbare vertikale Stange (24) auf die feste vertikale Stange (22) aufgehülst ist und die bewegbare vertikale Stange (24) sich relativ zur festen vertikalen Stange (22) nur entlang der Längsrichtung der festen vertikalen Stange (22) bewegen kann;
die feste vertikale Stange (22) und die bewegbare vertikale Stange (24) mit der Mittelachse der sich drehenden Komponente (40) konform sind.

9. Kalibrierhalterung (100) nach Anspruch 8, **dadurch gekennzeichnet, dass**
die Querträgerkomponente (30, 30') an der bewegbaren vertikalen Stange (24) oder der festen vertikalen Stange (22) montiert werden kann;
wenn die Querträgerkomponente (30, 30') an der bewegbaren vertikalen Stange (24) montiert ist, die Querträgerkomponente (30, 30') durch die bewegbare vertikale Stange (24) zum Bewegen relativ zur festen vertikalen Stange (22) entlang der Längsrichtung der festen vertikalen Stange (22) angetrieben werden kann.

10. Kalibrierhalterung (100) nach einem der vorhergehenden Ansprüche, **dadurch gekennzeichnet, dass**
die Querträgerkomponente (30, 30') einen ersten Querträgerabschnitt (32, 32') und einen zweiten Querträgerabschnitt (34, 34') und einen Verbindungsabschnitt (36, 36') umfasst;
der Verbindungsabschnitt (36, 36') an der Ständerkomponente (20) montiert ist, wobei ein Ende des Verbindungsabschnitts (36, 36') schwenkbar mit dem ersten Querträgerabschnitt (32, 32') verbunden ist und das andere Ende des Verbindungsabschnitts (36, 36') schwenkbar mit dem zweiten Querträgerabschnitt (34, 34') verbunden ist.

## Revendications

1. Support d'étalonnage (100) comprenant :
une base (10) ;
un composant de socle (20) raccordé à la base (10) ;
un composant de traverse (30, 30') monté sur le composant de socle (20), dans lequel le composant de traverse (30, 30') est utilisé pour monter un élément d'étalonnage et l'élément d'étalonnage est utilisé pour étalonner un système avancé d'aide à la conduite d'un véhicule ; et
**caractérisé par** :
un composant rotatif (40) monté entre le composant de socle (20) et la base (10) pour entraîner le composant de socle (20) à pivoter par rapport à la base (10) autour d'un axe central du composant de socle (20) afin de régler un angle de rotation du composant de traverse (30, 30') par rapport à l'axe central du composant de socle (20),
dans lequel le composant rotatif (40) comprend un siège de support (401), une base rotative (402) et une base de socle (403), dans lequel le siège de support (401) est monté sur la base (10), la base rotative (402) est raccordée, de manière rotative, au siège de support (401), la base de socle (403) est fixée à la base rotative (402) et la base de socle (403) est raccordée, de manière fixe, au composant de socle (20) pour supporter le composant de socle (20) ;
dans lequel la base rotative (402) peut pivoter par rapport à la base (10) autour de l'axe central du composant de socle (20) afin d'entraîner le composant de socle (20) à pivoter par rapport à la base (10) autour de l'axe central du composant de socle (20) à travers la base de socle (403),
dans lequel le composant rotatif (40) comprend en outre un élément de limitation pour limiter un angle de rotation de la base rotative (402) par rapport au siège de support (401) ;
dans lequel l'élément de limitation comprend un premier élément de limitation et un second élément de limitation, l'un parmi le premier élément de limitation et le second élément de limitation étant monté sur le siège de support (401) et l'autre parmi le premier élément de limitation et le second élément de limitation étant monté sur la base rotative (402) ; la base rotative (402) est fixe par rapport au siège de support (401) lorsque le premier élément de limitation coopère avec le second élément de limitation, et
dans lequel le premier élément de limitation est une partie de verrouillage (409), et le second élément de limitation est un bouton de verrouillage (410) ; la partie de verrouillage (409) est reçue entre la base rotative (402) et le siège de support (401) et est montée, de manière fixe, sur le siège de support (401), et la base rotative (402) est prévue avec un trou débouchant en forme d'arc (4021) de sorte que le bouton de verrouillage (410) passe à travers le trou débouchant en forme d'arc (4021) et ensuite coopère avec la partie de verrouillage (409), rendant la base rotative (402) fixe par rapport au siège de support (401).

2. Support d'étalonnage (100) selon la revendication 1, **caractérisé en ce que** :
le siège de support (401) est monté, de manière détachable, sur la base (10).

3. Support d'étalonnage (100) selon la revendication 1 ou 2, **caractérisé en ce que** :
le composant rotatif (40) comprend en outre un premier palier de butée (404) et un second palier de butée (405), dans lequel le premier palier de butée (404) est monté sur le siège de support (401), et le second palier de butée (405) est monté sur la base rotative (402) ;
le second palier de butée (405) peut tourner par rapport au premier palier de butée (404) de sorte que la base rotative (402) peut tourner par rapport au siège de support (401).

4. Support d'étalonnage (100) selon la revendication 3, **caractérisé en ce que** :
le composant rotatif (40) comprend en outre un composant d'arbre de raccordement positionné au niveau d'une ligne de raccordement axiale du premier palier de butée (404) et du second palier de butée (405) pour fixer une direction axiale du premier palier de butée (404) et du second palier de butée (405) en tant qu'axe central du composant de socle (20).

5. Support d'étalonnage (100) selon la revendication 1, **caractérisé en ce que** :
la base rotative (402) peut tourner par rapport au siège de support (401) dans une plage de radians du trou débouchant en forme d'arc (4021) lorsque le bouton de verrouillage ne coopère pas avec la partie de verrouillage (409) ;
le bouton de verrouillage peut être utilisé pour fixer la base rotative (402) dans n'importe quelle position dans la plage de radians par rapport au siège de support (401).

6. Support d'étalonnage (100) selon la revendication 5, **caractérisé en ce que** :
une échelle de radian est prévue à côté du trou débouchant en forme d'arc (4021) pour aider à identifier un angle de rotation de la base rotative (402).

7. Support d'étalonnage (100) selon l'une quelconque des revendications précédentes, **caractérisé en ce que** :
le composant de traverse (30, 30') peut être monté dans l'une quelconque d'au moins deux positions de hauteur du composant de socle (20).

8. Support d'étalonnage (100) selon la revendication 7, **caractérisé en ce que** :
le composant de socle (20) comprend une tige verticale fixe (22) et une tige verticale mobile (24) ;
la tige verticale fixe (22) est montée sur le composant rotatif (40) ;
la tige verticale mobile (24) est emmanchée sur la tige verticale fixe (22) et la tige verticale mobile (24) peut se déplacer par rapport à la tige verticale fixe (22) uniquement le long de la direction de longueur de la tige verticale fixe (22) ;
la tige verticale fixe (22) et la tige verticale mobile (24) sont compatibles avec l'axe central du composant rotatif (40).

9. Support d'étalonnage (100) selon la revendication 8, **caractérisé en ce que** :
le composant de traverse (30, 30') peut être monté sur la tige verticale mobile (24) ou sur la tige verticale fixe (22) ;
lorsque le composant de traverse (30, 30') est monté sur la tige verticale mobile (24), le composant de traverse (30, 30') peut être entraîné par la tige verticale mobile (24) pour se déplacer par rapport à la tige verticale fixe (22) le long de la direction de longueur de la tige verticale fixe (22).

10. Support d'étalonnage (100) selon l'une quelconque des revendications précédentes, **caractérisé en ce que** :
le composant de traverse (30, 30') comprend une première partie de traverse (32, 32'), une seconde partie de traverse (34, 34') et une partie de raccordement (36, 36) ;
la partie de raccordement (36, 36') est montée sur le composant de socle (20), une extrémité de la partie de raccordement (36, 36') étant raccordée, de manière pivotante, à la première partie de traverse (32, 32'), et l'autre extrémité de la partie de raccordement (36, 36') étant raccordée, de manière pivotante, à la seconde partie de traverse (34, 34').
